# FASCICULE DE BREVET EUROPEEN

(11) **EP 3 652 847 B1**
(45) Date de publication et mention de la délivrance du brevet: **13.09.2023**
(21) Numéro de dépôt: 18729732.0
(22) Date de dépôt: 17.05.2018
(51) Int. Cl.: H02M 3/158

(54) **DISPOSITIF ELECTRONIQUE EN DEMI-PONT COMPRENANT DEUX SYSTEMES POUR LA MINIMISATION DES TEMPS MORTS ENTRE LES COMMUTATIONS D'UN INTERRUPTEUR NIVEAU HAUT ET D'UN INTERRUPTEUR NIVEAU BAS**
ELEKTRONISCHE HALBBRÜCKENVORRICHTUNG MIT ZWEI SYSTEMEN ZUR MINIMIERUNG DER TOTZEIT ZWISCHEN DEN SCHALTOPERATIONEN DES OBEREN SCHALTERS UND DES UNTEREN SCHALTERS
HALF-BRIDGE ELECTRONIC DEVICE COMPRISING TWO SYSTEMS FOR MINIMISING DEAD-TIME BETWEEN THE SWITCHING OPERATIONS OF A HIGH LEVEL SWITCH AND OF A LOW LEVEL SWITCH

(30) Priorité: 10.07.2017 FR 1756490
(43) Date de publication de la demande: 20.05.2020
(73) Titulaire: STMicroelectronics France, 92120 Montrouge (FR)
(72) Inventeur: GUILLOT, Laurent, 31600 Seysses (FR); SUTTO, Thierry, 31600 Seysses (FR); BAILLY, Alain, 13790 Rousset (FR)
(74) Mandataire: Cabinet Beaumont
(86) Numéro de dépôt international: PCT/FR2018/051185
(87) Numéro de publication internationale: WO 2019/012192

(56) Documents cités:
- DE-A1-102010 030 134
- DE-B4-102010 030 134
- US-A1- 2001 036 085
- US-B1- 8 138 739

## Description

### DOMAINE DE L'INVENTION

La présente invention concerne le domaine de l'électronique de puissance. Elle concerne en particulier un dispositif électronique en demi-pont comprenant deux systèmes de synchronisation permettant de minimiser les temps morts entre l'activation alternée d'un interrupteur niveau haut et d'un interrupteur niveau bas, le dispositif étant notamment utilisé dans un convertisseur DC-DC.

### ARRIERE PLAN TECHNOLOGIQUE DE L'INVENTION

Des dispositifs électroniques dits « en demi-pont » (« half-bridge » selon la terminologie anglo-saxonne), composés d'un interrupteur niveau haut (« high-side ») et d'un interrupteur niveau bas (« low-side ») sont couramment utilisés dans des convertisseurs DC-DC pour convertir une tension continue en une autre tension continue de plus faible valeur.

Dans ces dispositifs en demi-pont, les deux interrupteurs, formés par des transistors, sont connectés en série au niveau d'un point milieu, auquel est connectée une charge. Comme déjà connu dans le domaine des convertisseurs DC-DC, la charge est sélectivement couplée soit à la source de tension continue, par activation (mise en mode passant) de l'interrupteur « high-side », soit à la masse, par activation de l'interrupteur « low-side ».

Un convertisseur DC-DC peut souffrir de pertes électriques significatives du fait des temps morts entre la désactivation (mise en mode bloqué) de l'interrupteur « high-side » et l'activation de l'interrupteur « low-side », et entre la désactivation de l'interrupteur « low-side » et l'activation de l'interrupteur « high-side ».

Pour maximiser l'efficacité du convertisseur, il est donc souhaitable de minimiser ces temps morts de commutation, tout en évitant une conduction simultanée des interrupteurs « high-side » et « low-side » qui provoquerait un court-circuit entre la source de tension et la masse.

Il existe dans l'art antérieur des systèmes de contrôle implémentés dans les dispositifs électroniques en demi-pont pour optimiser les temps morts de commutation. On connaît notamment les documents US2001/036085, US2010/321041, US6396250 et US6861826 qui proposent des systèmes de contrôle pour la synchronisation de l'activation et de la désactivation des interrupteurs « high-side » et « low-side » dans un convertisseur, utilisant la mesure de la tension au point milieu.

Avec l'implémentation d'interrupteurs à commutation rapide (en particulier, formés à partir de transistors GaN) dans les dispositifs électroniques en demi-pont, une contrainte supplémentaire apparaît : les temps de commutation typiques desdits interrupteurs passant d'une centaine de nanosecondes à une dizaine de nanosecondes, le temps de mesure, d'analyse et de réponse du système de contrôle doit être du même ordre de grandeur, pour minimiser efficacement les temps morts entre les commutations des interrupteurs.

### OBJET DE L'INVENTION

Un objet de la présente invention est de proposer une solution alternative aux solutions de l'état de l'art. Un objet de l'invention est notamment de proposer un dispositif électronique en demi-pont comprenant deux systèmes de synchronisation pour minimiser efficacement les temps morts entre les commutations successives des interrupteurs.

### BREVE DESCRIPTION DE L'INVENTION

La présente invention concerne un dispositif électronique selon la revendication 1.

Selon d'autres caractéristiques avantageuses et non limitatives de l'invention, prises seules ou selon toute combinaison techniquement réalisable :
- chaque circuit de détection comprend un élément capacitif directement connecté au point milieu et destiné à générer un courant transitoire dépendant des variations de la tension au point milieu ;
- chaque circuit de détection comprend, en série avec l'élément capacitif, une diode et une résistance shunt, pour la mesure d'une tension proportionnelle au courant transitoire ;
- chaque système de synchronisation comprend un circuit de traitement configuré pour générer, à partir des mesures du circuit de détection, le signal de synchronisation pour l'activation de l'interrupteur associé ;
- chaque circuit de traitement comprend un comparateur de tension et un point mémoire ;
- au moins un des interrupteurs comprend un transistor à haute tension ;
- le transistor à haute tension est formé à base de GaN ;
- au moins un des interrupteurs comprend un transistor à haute tension en mode déplétion en série avec un transistor à basse tension en mode enrichissement ;

L'invention concerne également un procédé selon la revendication 9.

Selon d'autres caractéristiques avantageuses et non limitatives de l'invention, prises seules ou selon toute combinaison techniquement réalisable :
- les étapes a) à f) sont réitérées pour chaque nouveau cycle de commutations alternées de l'interrupteur niveau bas et de l'interrupteur niveau haut ;
- le procédé comporte une étape c'), entre l'étape c) et l'étape d), de remise à zéro du second signal de synchronisation ;
- le procédé comporte une étape f'), entre l'étape f) et la réitération de l'étape a), de remise à zéro du premier signal de synchronisation ;
- l'interprétation du front montant comprend la détection d'un niveau haut déterminé de la tension au point milieu ;
- l'interprétation du front descendant comprend la détection d'un niveau bas déterminé de la tension au point milieu.

### BREVE DESCRIPTION DES DESSINS

D'autres caractéristiques et avantages de l'invention ressortiront de la description détaillée qui va suivre en référence aux figures annexées sur lesquelles :
- les figures 1a et 1b présentent respectivement un chronogramme et un schéma de principe d'un dispositif électronique en demi-pont selon l'état de la technique ;
- la figure 2 présente un schéma de principe d'un dispositif électronique en demi-pont conforme à l'invention ;
- la figure 3 présente un chronogramme des signaux de commande, des signaux de synchronisation et des signaux d'activation des interrupteurs du dispositif électronique en demi-pont selon un mode de mise en oeuvre de l'invention ;
- les figures 4a et 4b présentent des systèmes de synchronisation pour un dispositif électronique en demi-pont selon un mode de réalisation de l'invention.

### DESCRIPTION DETAILLEE DE L'INVENTION

Dans la partie descriptive, les mêmes références sur les figures pourront être utilisées pour des éléments de même nature.

L'invention concerne un dispositif électronique en demi-pont 100, comprenant en série un interrupteur niveau haut 2 et un interrupteur niveau bas 1.

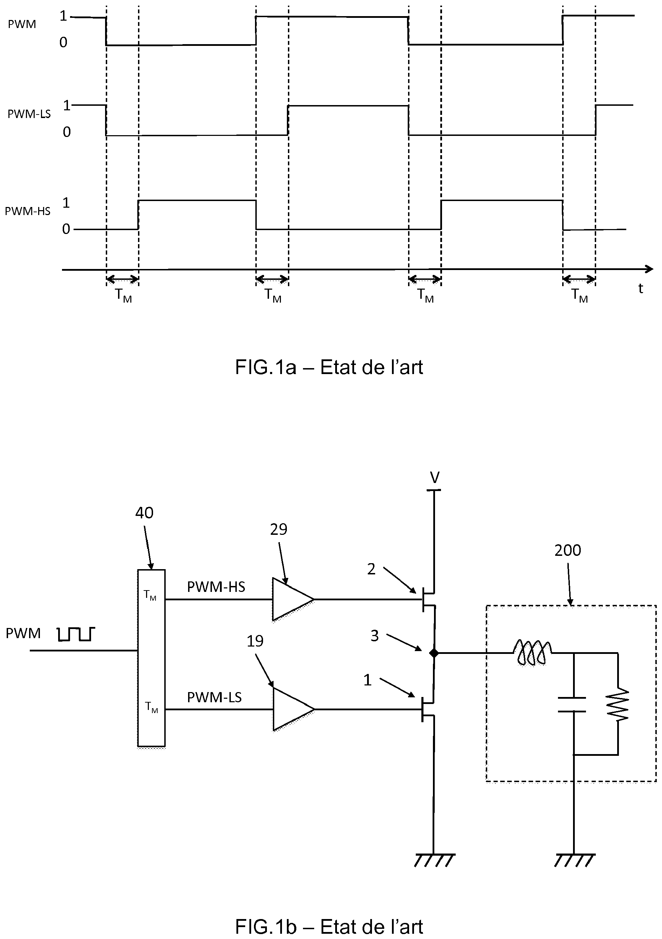

Classiquement, dans un tel dispositif, les deux interrupteurs 1,2 sont connectés entre eux en un point milieu 3 (figure 1b) . L'interrupteur niveau haut 2 est par ailleurs connecté à une source de tension V, pouvant être une source haute tension (de quelques 10aines de volts à quelques centaines de volts) ; l'interrupteur niveau bas 1 est par ailleurs connecté à la masse. Une charge 200, telle que par exemple illustrée sur la figure 1b, est destinée à être connectée au point milieu 3.

Selon un mode standard de fonctionnement, un signal d'entrée PWM (« pulse width modulation » selon la terminologie anglo-saxonne, ou MLI « modulation à largeur d'impulsion ») est envoyé aux interrupteurs niveau bas 1 et niveau haut 2, par l'intermédiaire respectivement d'un premier circuit de commande 19 et d'un second circuit de commande 29. Le signal d'entrée PWM se traduit par des impulsions pour activer et désactiver l'interrupteur niveau haut 2 et en alternance, désactiver et activer l'interrupteur niveau bas 1. Par activer, on entend dans le contexte de cette invention, l'action de fermer l'interrupteur pour le rendre passant ; par désactiver, on entend l'action d'ouvrir l'interrupteur pour le rendre bloquant.

Pour éviter tout court-circuit lié à une activation des deux interrupteurs 1,2 simultanément, il est nécessaire de prévoir des temps morts T_{M} entre la désactivation d'un interrupteur et l'activation de l'autre (figure 1a).

Un dispositif de génération de délais 40 (figure 1b), recevant le signal d'entrée PWM, génère un signal de commande PWM-LS (appelé premier signal de commande), de même polarité que le signal d'entrée PWM, et dont les impulsions (état activé 1) sont décalées d'un temps T_{M} par rapport au signal d'entrée PWM. Le dispositif de génération de délai 40 génère également un signal de commande PWM-HS (appelé second signal de commande), de polarité inversée par rapport au signal d'entrée PWM, et dont les impulsions (état activé 1) sont décalées d'un temps T_{M} par rapport au signal d'entrée PWM.

Le premier circuit de commande 19 reçoit en entrée le premier signal de commande PWM-LS, qui va commander l'activation/désactivation de l'interrupteur niveau bas 1. Le second circuit de commande 29 reçoit en entrée le second signal de commande PWM-HS (de polarité inversée par rapport au premier signal de commande PWM-LS), qui va commander l'activation/désactivation de l'interrupteur niveau haut 2.

Bien sur, comme précédemment énoncé, les temps morts T_{M} induits (figure 1a) doivent être minimisés au maximum pour éviter des pertes électriques significatives dans un convertisseur qui comprendrait le dispositif 100.

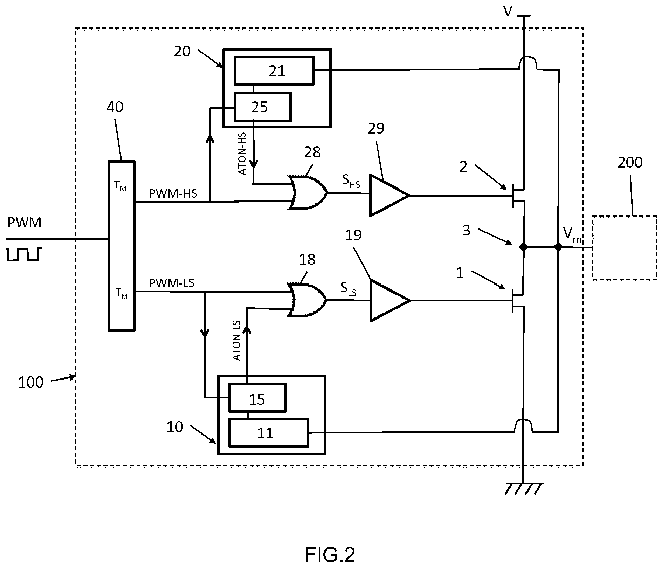

Le dispositif 100 selon l'invention comprend un premier 10 et un second 20 système de synchronisation, respectivement destinés à envoyer un signal de synchronisation ATON-LS (« Automatic Turn ON - Low Side ») pour permettre l'activation de l'interrupteur niveau bas 1, et un signal de synchronisation ATON-HS (« Automatic Turn ON - High Side ») pour permettre l'activation de l'interrupteur niveau haut 2 (figure 2).

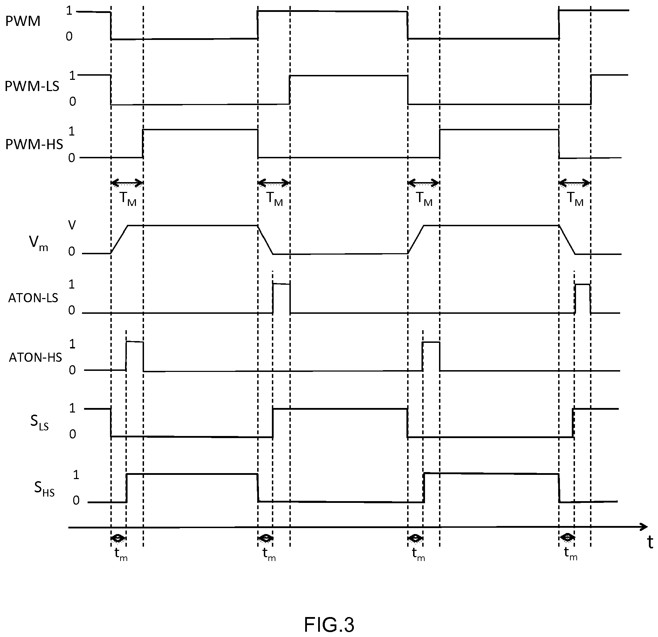

Chaque système de synchronisation 10,20 comprend un circuit de détection 11,21 pour interpréter la variation dans le temps (dVm/dt) de la tension Vm au point milieu 3. Comme illustré sur le chronogramme de la figure 3, la tension Vm au point milieu 3 va varier au cours du temps, selon que l'interrupteur niveau haut 2 ou l'interrupteur niveau bas 1 seront respectivement activés (fermés) ou désactivés (ouverts). En pratique, la tension Vm au point milieu 3 va diminuer dès que l'interrupteur niveau haut 2 va s'ouvrir (désactivation) ; elle va augmenter dès que l'interrupteur niveau bas 1 va s'ouvrir (désactivation).

Le premier circuit de détection 11, inclus dans le premier système de synchronisation 10, est configuré pour détecter les fronts descendants de la tension Vm au point milieu 3. Le second circuit de détection 21, inclus dans le second système de synchronisation 20 est quant à lui configuré pour détecter les fronts montants de la tension Vm au point milieu 3.

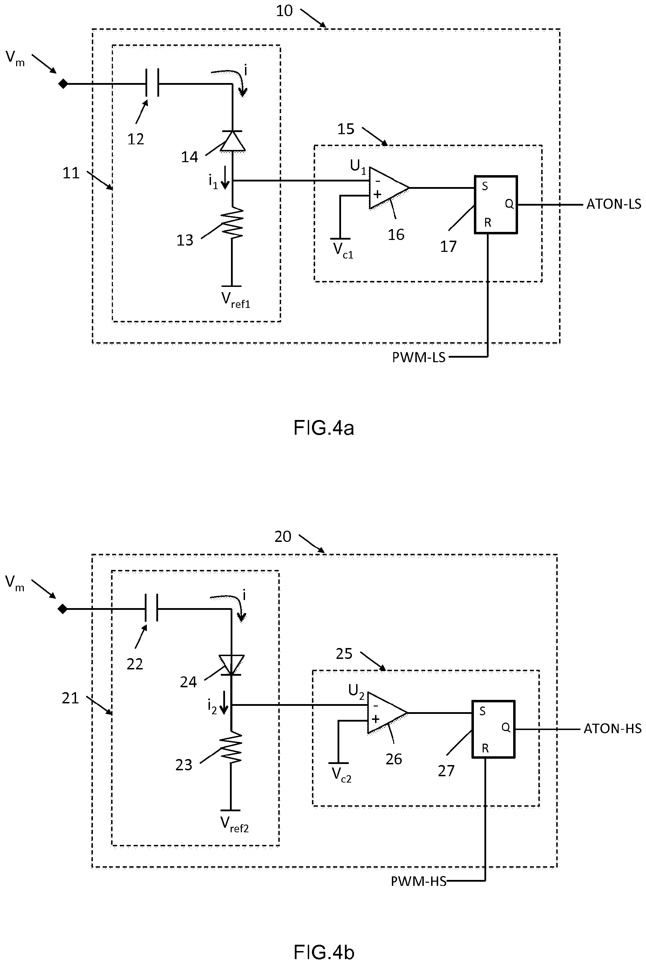

Pour cela, chaque circuit de détection 11,21 comprend avantageusement un élément capacitif 12,22 directement connecté au point milieu 3 (figures 4a, 4b). Cet élément capacitif 12,22 va générer un courant transitoire i dépendant de la variation temporelle de la tension Vm au point milieu 3. L'élément capacitif 12,22 devra être compatible avec le niveau maximum que peut atteindre la tension Vm au point milieu 3, soit au moins la tension V de la source de tension connectée à l'interrupteur niveau haut 2. L'utilisation d'un élément capacitif 12,22 permet de s'affranchir dans le circuit de détection 11,21, d'un composant actif de mesure capable de tenir la tension V de la source de tension. A titre d'exemple, l'élément capacitif 12,22 pourra consister en une capacité dimensionnée en fonction la tension V de la source de tension (de quelques dizaines de volts à quelques centaines de volts). Selon un autre exemple avantageux, l'élément capacitif 12,22 pourra consister en deux lignes métalliques coplanaires disposées sur un circuit imprimé incorporant le dispositif 100, également dimensionnées en fonction la tension V de la source de tension.

Selon un premier mode de réalisation (non représenté), le courant transitoire i pourra être mesuré directement par un ampèremètre, connecté en série avec l'élément capacitif 12,22.

Selon un deuxième mode de réalisation, plus avantageux, chaque circuit de détection 11,21 comprend, en série avec l'élément capacitif 12,22, une résistance shunt 13,23 (figures 4a, 4b). Elle permet de mesurer à ses bornes, une tension U₁,U₂ proportionnelle au courant transitoire i. Chaque circuit de détection 11,21 peut ainsi produire une mesure de la tension U₁,U₂, laquelle est représentative des variations de la tension Vm au point milieu 3.

Avantageusement, chaque circuit de détection 11,21 comprend également une diode 14,24, en série avec la résistance shunt 13,23, cette dernière étant connectée à la masse ou à une tension de référence V_{ref1}, V_{ref2}.

La diode 14,24 n'autorise le passage du courant transitoire i dans la résistance shunt 13,23 que pour une polarité définie. Selon que la tension Vm au point milieu 3 varie suivant un front descendant ou montant, le courant transitoire i généré à la sortie de l'élément capacitif 12,22 sera positif ou négatif. Ainsi, la diode 14 est configurée pour autoriser uniquement le passage du courant transitoire i₁ lié à un front descendant de la tension Vm au point milieu 3, alors que la diode 24 est configurée pour autoriser uniquement le passage du courant transitoire i₂ (de signe opposé à i₁) lié à un front montant de la tension Vm au point milieu 3.

Le premier circuit de détection 11 est ainsi configuré pour interpréter un front descendant de la tension Vm au point milieu 3 : il permet de faire une mesure directe ou indirecte du courant transitoire i₁ dû à une variation temporelle décroissante (front descendant) de la tension Vm au point milieu 3.

A partir de cette mesure, le premier système de synchronisation 10 doit générer un premier signal de synchronisation ATON-LS pour permettre l'activation de l'interrupteur niveau bas 1.

Pour cela, le premier système de synchronisation 10 comprend avantageusement un premier circuit de traitement 15. Ce circuit de traitement 15 comporte un comparateur de tension 16, qui va comparer la valeur de la tension U₁ mesurée (proportionnelle au courant transitoire i₁, selon le deuxième mode de réalisation décrit plus haut) avec une tension de consigne V_{c1}. Dès que la tension U₁ mesurée est supérieure à la tension de consigne V_{c1}, le comparateur 16 va envoyer une impulsion à un point mémoire 17. Ladite impulsion fait passer le signal de synchronisation ATON-LS (appelé premier signal de synchronisation), en sortie du point mémoire 17, dans un état activé 1 (figure 3). A titre d'exemple, le point mémoire 17 peut être réalisé par une bascule asynchrone (verrou ou « latch » selon la terminologie anglo-saxonne). Le point mémoire 17 (ATON-LS) est remis à zéro dès que le signal de commande PWM-LS passe à l'état 1 (figure 3).

Le premier signal de synchronisation ATON-LS, généré par le premier système de synchronisation 10, et le premier signal de commande PWM-LS sont ensuite combinés dans une porte logique 18 de type OU, pour former un signal d'activation/désactivation S_{LS} (appelé premier signal d'activation/désactivation) (figure 3) . Le premier signal d'activation/désactivation S_{LS} est transmis au premier circuit de commande 19 et va activer/désactiver l'interrupteur niveau bas 1.

Dans le premier système de synchronisation 10, la différence entre la tension de consigne et la tension de référence (V_{c1}-V_{ref1}) permet d'ajuster le niveau de basculement (U₁ > V_{c1}) du comparateur de tension 16, pour créer le signal ATON-LS. L'ajustement de ce niveau permet de compenser le temps de propagation du système : on pourra par exemple définir cette différence de tension pour que le signal ATON-LS soit activé à l'état 1 sensiblement avant que Vm n'atteigne sa valeur minimale.

Le second circuit de détection 21, quant à lui, est configuré pour interpréter un front montant de la tension Vm au point milieu 3 : il permet de faire une mesure directe ou indirecte du courant transitoire i₂ dû à une variation temporelle croissante (front montant) de la tension Vm au point milieu 3.

A partir de cette mesure, le second système de synchronisation 20 doit générer un signal de synchronisation ATON-HS pour permettre l'activation de l'interrupteur niveau haut 2.

Pour cela, le second système de synchronisation 20 comprend avantageusement un second circuit de traitement 25. Ce circuit de traitement 25 comporte un comparateur de tension 26, qui va comparer la valeur de la tension U₂ mesurée (proportionnelle au courant transitoire i₂, selon le deuxième mode de réalisation décrit plus haut) avec une tension de consigne V_{c2}. Dès que la tension U₂ mesurée est supérieure à la tension de consigne V_{c2}, le comparateur 26 va envoyer une impulsion à un point mémoire 27. Ladite impulsion fait passer le signal de synchronisation ATON-HS (appelé second signal de synchronisation), en sortie du point mémoire 27, dans un état activé 1. A titre d'exemple, le point mémoire 27 peut être réalisé par une bascule asynchrone. Le point mémoire 27 (ATON-HS) est remis à zéro dès que le signal de commande PWM-HS passe à l'état 1 (figure 3).

Le second signal de synchronisation ATON-HS, généré par le second système de synchronisation 20, et le second signal de commande PWM-HS sont ensuite combinés dans une porte logique 28 de type OU, pour former un signal d'activation/désactivation S_{HS} (appelé second signal d'activation/désactivation) (figure 3). Le second signal d'activation/désactivation S_{HS} est transmis au second circuit de commande 29 et va activer/désactiver l'interrupteur niveau haut 2.

Dans le second système de synchronisation 20, la différence entre la tension de consigne et la tension de référence (V_{c2}-V_{ref2}) permet d'ajuster le niveau de basculement (U₂ > V_{c2}) du comparateur de tension 26, pour créer le signal ATON-HS. L'ajustement de ce niveau permet de compenser le temps de propagation du système : on pourra par exemple définir cette différence de tension pour que le signal ATON-HS soit activé à l'état 1 sensiblement avant que Vm n'atteigne sa valeur maximale.

Comme illustré sur le chronogramme de la figure 3, les premier et second signaux d'activation/désactivation S_{LS},S_{HS} permettent de réduire les temps morts tₘ par rapport aux signaux de commande PWM-LS,PWM-HS avec délai fixe T_{M}. En effet, partant d'un délai fixe T_{M} défini (par exemple 50 à 100ns) entre les signaux de commande PWM-LS, PWM-HS, les signaux de synchronisation ATON-LS et ATON-HS sont aptes à basculer en avance de phase, à l'état 1, respectivement le premier S_{LS} et le second S_{HS} signal d'activation/désactivation commandant les interrupteurs niveau bas 1 et niveau haut 2 : ce qui permet de réduire les temps morts effectifs tₘ (par exemple entre 4 à 20ns). Le délai fixe T_{M} sera préférentiellement choisi pour être sécuritaire (suffisamment long) pour éviter tout risque de conduction simultanée des interrupteurs « high-side » et « low-side » qui provoquerait un court-circuit entre la source de tension et la masse.

L'optimisation des temps morts permet de minimiser les pertes donc de maximiser le rendement (ou l'efficacité énergétique) du convertisseur muni du dispositif 100.

Les signaux de synchronisation ATON-LS et ATON-HS sont générés pour chaque cycle de commutation des interrupteurs niveau bas 1 et niveau haut 2 ; le dispositif 100 selon l'invention permet donc une activation (mise à l'état 1) automatique d'un interrupteur 1,2 à chaque cycle de commutation, et au plus tôt après la désactivation de l'autre interrupteur 2,1, par l'interprétation des fronts montant et descendant de la tension Vm au point milieu 3.

Le fait que chaque système de synchronisation 10,20 soit dédié à l'activation d'un interrupteur 1,2 permet également une interprétation de la variation de tension Vm efficace et une transmission directe et rapide de l'instruction à l'interrupteur.

Les convertisseurs DC-DC utilisant des interrupteurs 1,2 rapides basculent le signal Vm en 5ns au minimum (par exemple, temps de commutation compris entre 5 et 20ns) ; le système de synchronisation 10,20 doit présenter un temps de réponse inférieur à ces valeurs pour minimiser le temps mort et ainsi minimiser les pertes lors de ces commutations.

Le fonctionnement du dispositif électronique en demi-pont 100 selon l'invention va maintenant être décrit en référence au chronogramme de la figure 3.

Prenons l'exemple d'un signal d'entrée PWM digital en créneau correspondant à une alternance d'états 1 et 0. Par l'intermédiaire d'un dispositif de génération de délais 40, un premier signal de commande PWM-LS, dont les impulsions sont décalées d'un temps T_{M}, et un second signal de commande PWM-HS, dont les impulsions sont inversées et décalées par rapport au signal d'entrée PWM d'un temps T_{M}, sont générés. Le temps mort T_{M} est défini de manière sécuritaire pour éviter que les deux interrupteurs 1,2 ne soient en état activé simultanément.

Comme illustré sur la figure 3, le point de départ du chronogramme correspond à l'état 1 pour le signal d'entrée PWM, qui génère un premier signal de commande PWM-LS à l'état 1 commandant la fermeture (activation) de l'interrupteur niveau bas 1. La tension Vm au point milieu 3 présente une valeur minimale, typiquement 0.

Lorsque le signal d'entrée PWM passe à l'état 0, le signal de commande PWM-LS passe également à l'état 0 et le premier circuit de commande 19 commande la désactivation (ouverture) de l'interrupteur niveau bas 1. La tension Vm au point milieu 3 croit jusqu'à une valeur maximale, typiquement la tension V.

Le second système de synchronisation 20 interprète ce front montant de la tension Vm au point milieu 3 par l'intermédiaire de son circuit de détection 21. Au moment où la tension Vm atteint sa valeur maximale (ou sensiblement avant, selon la valeur paramétrée de la différence de tension (V_{c2}-V_{ref2})), le second système de synchronisation 20, par l'intermédiaire de son circuit de traitement 25, génère le second signal de synchronisation ATON-HS, qui se combine avec le signal de commande PWM-HS dans la porte logique 28 de type OU, pour former le second signal d'activation/désactivation S_{HS} : le second signal de synchronisation ATON-HS va permettre de basculer en mode activation (état 1) le signal S_{HS} : pour commander la fermeture (activation) de l'interrupteur niveau haut 2, dans un délai plus court tₘ que le délai T_{M} relatif au signal de commande PWM-HS. Le passage à l'état 1 du signal de commande PWM-HS vient ensuite remettre à 0 (reset) le point mémoire 27 du circuit de traitement 25 du second système de synchronisation 20.

Dès que le signal d'entrée passe à l'état 1, le signal de commande PWM-HS passe à l'état 0 et le second circuit de commande 29 commande la désactivation (ouverture) de l'interrupteur niveau haut 2. La tension Vm au point milieu 3 décroit jusqu'à une valeur minimale, typiquement 0.

Le premier système de synchronisation 10 interprète ce front descendant de la tension Vm au point milieu 3 par l'intermédiaire de son circuit de détection 11. Au moment où la tension Vm atteint sa valeur minimale (ou sensiblement avant, selon la valeur paramétrée de la différence de tension (V_{c1}-V_{ref1})), le premier système de synchronisation 10, par l'intermédiaire de son circuit de traitement 15, génère le premier signal de synchronisation ATON-LS, qui se combine avec le signal de commande PWM-LS dans la porte logique 28 de type OU, pour former le signal d'activation/désactivation S_{LS} : le premier signal de synchronisation ATON-LS va permettre de basculer en mode activation (état 1) le signal S_{LS} pour commander la fermeture (activation) de l'interrupteur niveau bas 1, dans un délai plus court tₘ que le délai T_{M} relatif au signal de commande PWM-LS. Le passage à l'état 1 du signal de commande PWM-LS vient ensuite remettre à 0 (reset) le point mémoire 17 du circuit de traitement 15 du premier système de synchronisation 10.

Lorsque le signal d'entrée PWM repasse à l'état 0, le signal de commande PWM-LS passe également à l'état 0 et le premier circuit de commande 19 commande la désactivation (ouverture) de l'interrupteur niveau bas 1, et ainsi de suite. Pour chaque nouveau cycle de commutation alternée des interrupteurs 1,2, les systèmes de synchronisation 10,20 vont générer alternativement les signaux de synchronisation ATON-LS et ATON-HS pour activer un interrupteur 1,2 au plus tôt après que l'autre interrupteur 2,1 a été désactivé.

Selon un mode particulier de mise en oeuvre, au moins un des interrupteurs 1,2 du dispositif électronique en demi-pont 100 comprend un transistor à haute tension, permettant de commuter des tensions de plusieurs dizaines à quelques centaines de volts (par exemple 400V).

Le transistor à haute tension pourra par exemple être formé à base de matériaux III-N tels que le nitrure de gallium (GaN). Le transistor pourra être un HEMT (« high électron mobility transistor »). Alternativement, le transistor haute tension pourra être formé à base de silicium.

Selon un autre mode de mise en oeuvre particulier, au moins l'un des interrupteurs 1,2 du dispositif 100 en demi-pont comprend un transistor à haute tension en mode déplétion en série avec un transistor à basse tension en mode enrichissement. Le transistor à haute tension et le transistor à basse tension pourront former un circuit cascode, la grille du transistor à haute tension étant dans ce cas connectée à la source du transistor à basse tension. Ils pourront alternativement former un circuit cascade, la grille du transistor à haute tension étant dans ce cas commandée par un circuit de commande 19,29.

L'invention concerne également un procédé de synchronisation de l'activation alternée d'un interrupteur niveau bas 1 et d'un interrupteur niveau haut 2 dans un dispositif électronique en demi-pont 100. L'interrupteur niveau bas 1 et l'interrupteur niveau haut 2 sont respectivement commandés par un premier signal d'activation/désactivation S_{LS} et un second signal d'activation/désactivation S_{HS}. Le procédé comporte les étapes suivantes :
a) la désactivation de l'interrupteur niveau bas 1 lorsqu'un premier signal de commande PWM-LS passe à l'état 0 ; ledit premier signal de commande PWM-LS passe à l'état 0 dès que le signal d'entrée PWM passe à l'état 0 ;
b) l'interprétation d'une variation suivant un front montant de la tension Vm au point milieu 3 pour générer un second signal de synchronisation ATON-HS apte à activer un interrupteur niveau haut 2 ;
c) l'activation (mode passant) de l'interrupteur niveau haut 2, par le second signal d'activation/désactivation S_{HS} : résultant de la combinaison, dans une porte logique 28 de type OU, du second signal de synchronisation ATON-HS et d'un second signal de commande PWM-HS ;
d) la désactivation de l'interrupteur niveau haut 2 lorsque le second signal de commande PWM-HS passe à l'état 0 ; ledit second signal de commande PWM-HS passe à l'état 0 dès que le signal d'entrée PWM passe à l'état 1 ;
e) l'interprétation d'une variation suivant un front descendant de la tension Vm au point milieu 3 pour générer un premier signal de synchronisation ATON-LS apte à activer un interrupteur niveau bas 1 ;
f) l'activation de l'interrupteur niveau bas 1, par le premier signal d'activation/désactivation S_{LS} résultant de la combinaison, dans une porte logique 18 de type OU, du premier signal de synchronisation ATON-LS et du premier signal de commande PWM-LS.

Les étapes a) à f) sont réitérées pour chaque nouveau cycle de commutations alternées de l'interrupteur niveau bas 1 et de l'interrupteur niveau haut 2.

Avantageusement, le procédé comporte une étape c'), entre l'étape c) et l'étape d), de remise à zéro (reset) du second signal de synchronisation ATON-HS ; la remise à zéro s'opère lorsque le second signal de commande PWM-HS passe à l'état 1.

Avantageusement, le procédé comporte également une étape f'), entre l'étape f) et la réitération de l'étape a), de remise à zéro du premier signal de synchronisation ATON-LS ; la remise à zéro s'opère lorsque le premier signal de commande PWM-LS passe à l'état 1.

L'interprétation de la variation selon un front montant de la tension Vm au point milieu 3 comprend la détection d'un niveau haut déterminé de ladite tension Vm. Le niveau haut déterminé pourra être la valeur maximale de la tension Vm ou alternativement une valeur sensiblement inférieure à la valeur maximale. Le choix du niveau haut déterminé permet de générer, plus ou moins tôt après la désactivation de l'interrupteur niveau bas 1, le second signal de synchronisation ATON-HS pour activer l'interrupteur niveau haut 2.

L'interprétation de la variation selon un front descendant de la tension Vm au point milieu 3 comprend la détection d'un niveau bas déterminé de ladite tension Vm. Le niveau bas déterminé pourra être la valeur minimale de la tension Vm ou alternativement une valeur sensiblement supérieure à la valeur minimale. Le choix du niveau bas déterminé permet de générer, plus ou moins tôt après la désactivation de l'interrupteur niveau haut 2, le premier signal de synchronisation ATON-LS pour activer l'interrupteur niveau bas 1.

Le dispositif électronique 100 en demi-pont et le procédé selon l'invention peuvent trouver des applications dans le domaine des convertisseurs de puissance DC-DC, AC-DC, etc.

Bien entendu l'invention n'est pas limitée aux modes de mise en oeuvre décrits, et on peut y apporter des variantes de réalisation sans sortir du cadre de l'invention tel que défini par les revendications.

## Revendications

1. Dispositif électronique en demi-pont (100), comprenant en série un interrupteur niveau haut (2) et un interrupteur niveau bas (1), connectés en un point milieu (3), le dispositif électronique en demi-pont (100) comprenant en outre un dispositif de génération de délais (40),
le dispositif de génération de délais (40)étant apte à former, à partir d'un signal d'entrée (PWM) digital,
- un premier signal de commande (PWM-LS) digital dont le front de basculement d'un état 0 à un état 1 est décalé d'un temps mort (TM ) par rapport à un front de basculement d'un état 0 à un état 1 du signal d'entrée (PWM) et dont le front de basculement d'un état 1 à un état 0 n'est pas décalé par rapport au front de basculement d'un état 1 à un état 0 du signal d'entrée (PWM),
- et un second signal de commande (PWM-HS) digital dont le front de basculement d'un état 0 à un état 1 est décalé du temps mort (TM ) par rapport à un front de basculement d'un état 1 à un état 0 du signal d'entrée (PWM) et dont le front de basculement d'un état 1 à un état 0 n'est pas décalé par rapport au front de basculement d'un état 0 à un état 1 du signal d'entrée (PWM),
l'interrupteur niveau bas (1) et l'interrupteur niveau haut (2) étant respectivement commandés par un premier (S_{LS}) et un second (S_{HS}) signal d'activation/désactivation, le dispositif (100) étant **caractérisé en ce qu'**il comprend :
• un premier système de synchronisation (10) comprenant un premier circuit de détection (11) configuré pour interpréter une variation, suivant un front descendant, de la tension (Vm) au point milieu (3), le premier système (10) étant configuré pour générer un premier signal de synchronisation (ATON-LS) digital, activé à un état 1 par le front descendant de la tension (Vm) au point milieu (3) et remis à un état 0 quand le premier signal de commande (PWM-LS) passe à un état 1 ;
• un second système de synchronisation (20) comprenant un second circuit de détection (21) configuré pour interpréter une variation, suivant un front montant, de la tension (Vm) au point milieu (3), le second système (20) étant configuré pour générer un second signal de synchronisation (ATON-HS) digital, activé à un état 1 par le front montant de la tension (Vm) au point milieu (3) et remis à un état C quand le second signal de commande (PWM-HS) passe à un état 1 ;
• une porte logique (18) de type OU combinant le premier signal de synchronisation (ATON-LS) avec le premier signal de commande (PWM-LS), pour former le premier signal d'activation/désactivation (S_{LS}) ;
• une autre porte logique (28) de type OU combinant le second signal de synchronisation (ATON-HS) avec le second signal de commande (PWM-HS), pour former le second signal d'activation/désactivation (S_{HS}).

2. Dispositif électronique en demi-pont (100) selon la revendication précédente, dans lequel chaque circuit de détection (11,21) comprend un élément capacitif (12,22) directement connecté au point milieu (3) et destiné à générer un courant transitoire (i,i₁,i₂) dépendant des variations de la tension (Vm) au point milieu (3).

3. Dispositif électronique en demi-pont (100) selon la revendication précédente, dans lequel chaque circuit de détection (11,21) comprend, en série avec l'élément capacitif (12,22), une diode (14,24) et une résistance shunt (13,23), pour la mesure d'une tension (U,U₁,U₂) proportionnelle au courant transitoire (i,i₁,i₂).

4. Dispositif électronique en demi-pont (100) selon l'une des revendications précédentes, dans lequel chaque système de synchronisation (10,20) comprend un circuit de traitement (15,25) configuré pour générer, à partir de mesures du circuit de détection (11,21), le signal de synchronisation (ATON-LS,ATON-HS) pour l'activation de l'interrupteur (1,2) associé.

5. Dispositif électronique en demi-pont (100) selon les revendications 3 et 4, dans lequel chaque circuit de traitement (15,25) comprend un comparateur de tension (16,26) et un point mémoire (17,27).

6. Dispositif électronique en demi-pont (100) selon l'une des revendications précédentes, dans lequel au moins un des interrupteurs (1,2) comprend un transistor à haute tension.

7. Dispositif électronique en demi-pont (100) selon la revendication précédente, dans lequel le transistor à haute tension est formé à base de GaN.

8. Dispositif électronique en demi-pont (100) selon l'une des deux revendications précédentes, dans lequel au moins un des interrupteurs (1,2) comprend un transistor à haute tension en mode déplétion en série avec un transistor à basse tension en mode enrichissement.

9. Procédé de synchronisation de l'activation alternée d'un interrupteur niveau bas (1) et d'un interrupteur niveau haut (2) dans un dispositif électronique en demi-pont (100), **caractérisé en ce qu'**il comprend les étapes suivantes :
a) la désactivation de l'interrupteur niveau bas (1) lorsqu'un premier signal de commande (PWM-LS) digital passe à l'état 0, le premier signal de commande (PWM-LS) étant formé à partir d'un signal d'entrée (PWM) digital et dont le front de basculement d'un état 0 à un état 1 est décalé d'un temps mort (TM ) par rapport à un front de basculement d'un état 0 à un état 1 du signal d'entrée (PWM) et dont le front de basculement d'un état 1 à un état 0 n'est pas décalé par rapport au front de basculement d'un état 1 à un état 0 du signal d'entrée (PWM)
b) l'interprétation d'une variation suivant un front montant de la tension (Vm) au point milieu (3), pour générer un second signal de synchronisation (ATON-HS) digital apte à activer un interrupteur niveau haut (2), le second signal de synchronisation étant activé à un état 1 par le front montant de la tension (Vm) au point milieu (3) et remis à un état C quand un second signal de commande (PWM-HS) digital passe à un état 1,
c) l'activation de l'interrupteur niveau haut (2), par un second signal d'activation/désactivation (S_{HS}) résultant de la combinaison du second signal de synchronisation (ATON-HS) avec le second signal de commande (PWM-HS) dans une porte logique (28) de type OU,
d) la désactivation de l'interrupteur niveau haut (2) lorsque le second signal de commande (PWM-HS) passe à l'état 0, le second signal de commande (PWM-HS) étant formé à partir du signal d'entrée (PWM) et dont le front de basculement d'un état 0 à un état 1 est décalé du temps mort (TM ) par rapport à un front de basculement d'un état 1 à un état 0 du signal d'entrée (PWM) et dont le front de basculement d'un état 1 à un état 0 n'est pas décalé par rapport au front de basculement d'un état 0 à un état 1 du signal d'entrée (PWM),inversé par rapport au signal d'entrée (PWM) et décalé d'un temps mort (TM ) par rapport à un front de basculement d'un état 1 à un état 0 du signal d'entrée (PWM)
e) l'interprétation d'une variation suivant un front descendant de la tension (Vm) au point milieu (3) pour générer un premier signal de synchronisation (ATON-LS) apte à activer un interrupteur niveau bas (1), le premier signal de synchronisation (ATON-LS) étant activé à un état 1 par le front descendant de la tension (Vm) au point milieu (3) et remis à un état 0 quand le premier signal de commande (PWM-LS) passe à un état 1,
f) l'activation de l'interrupteur niveau bas (1), par un premier signal d'activation/désactivation (S_{LS}) résultant de la combinaison du premier signal de synchronisation (ATON-LS) avec le premier signal de commande (PWM-LS) dans une porte logique (18) de type OU.

10. Procédé de synchronisation selon la revendication précédente, dans lequel les étapes a) à f) sont réitérées pour chaque nouveau cycle de commutations alternées de l'interrupteur niveau bas (1) et de l'interrupteur niveau haut (2).

## Patentansprüche

1. Elektronische Halbbrücken-Vorrichtung (100), die in Serie einen Hochpegelschalter (2) und einen Niedrigpegelschalter (1) aufweist, die an einem Mittelpunkt (3) verbunden sind, wobei die elektronische Halbbrücken-Vorrichtung (100) ferner eine Verzögerungs-Erzeugungs-Vorrichtung (40) aufweist, wobei die Verzögerungs-Erzeugungs- Vorrichtung (40) in der Lage ist, aus einem digitalen Eingangssignal (PWM), Folgendes zu bilden,
- ein erstes digitales Steuersignal (PWM-LS), dessen Flanke zum Triggern von einem Zustand 0 zu einem Zustand 1 um eine Auszeit (TM) geschoben wird, und zwar bezüglich einer Flanke zum Triggern von einem Zustand 0 zu einem Zustand 1 des Eingangssignals (PWM), und dessen Flanke zum Triggern von einem Zustand 1 zu einem Zustand 0 nicht geschoben wird, und zwar bezüglich der Flanke zum Triggern von einem Zustand 1 zu einem Zustand 0 des Eingangssignals (PWM),
- und ein zweites digitales Steuersignal (PWM-HS), dessen Flanke zum Triggern von einem Zustand 0 zu einem Zustand 1 um die Auszeit (TM) geschoben wird, und zwar bezüglich einer Flanke zum Triggern von einem Zustand 1 zu einem Zustand 0 des Eingangssignals (PWM), und dessen Flanke zum Triggern von einem Zustand 1 zu einem Zustand 0 nicht geschoben wird, und zwar bezüglich der Flanke zum Triggern von einem Zustand 0 zu einem Zustand 1 des Eingangssignals (PWM),
wobei der Niedrigpegelschalter (1) und der Hochpegelschalter (2) entsprechend durch ein erstes (S_{LS}) und ein zweites (S_{HS}) Aktivierungs-/Deaktivierungssignal gesteuert werden, wobei die Vorrichtung (100) **dadurch gekennzeichnet** ist, das sie Folgendes aufweist:
• ein erstes Synchronisierungssystem (10), das eine erste Detektionsschaltung (11) aufweist, die eingerichtet ist, eine Änderung zu interpretieren, die einer fallenden Flanke folgt, und zwar der Spannung (Vm) am Mittelpunkt (3), wobei das erste System (10) eingerichtet ist ein erstes digitales Synchronisierungssignal (ATON-LS) zu erzeugen, das in einem Zustand 1 durch die fallende Flanke der Spannung (Vm) am Mittelpunkt (3) aktiviert wird und das in einem Zustand 0 zurückgesetzt wird, wenn das erste Steuersignal (PWM-LS) in einen Zustand 1 geht;
• ein zweites Synchronisierungssystem (20), das eine zweite Detektionsschaltung (21) aufweist, die eingerichtet ist, eine Änderung zu interpretieren, die einer steigenden Flanke folgt, und zwar der Spannung (Vm) am Mittelpunkt (3), wobei das zweite System (20) eingerichtet ist ein zweites digitales Synchronisierungssignal (ATON-HS) zu erzeugen, das in einem Zustand 1 durch die steigende Flanke der Spannung (Vm) am Mittelpunkt (3) aktiviert wird und das in einem Zustand 0 zurückgesetzt wird, wenn das zweite Steuersignal (PWM-HS) in einen Zustand 1 geht;
• ein Logikgatter (18) des ODER-Typs, das das erste Synchronisierungssignal (ATON-LS) mit dem ersten Steuersignal (PWM-LS) kombiniert, um das erste Aktivierungs-/Deaktivierungssignal (S_{LS}) zu bilden;
• ein weiteres Logikgatter (28) des ODER-Typs, das das zweite Synchronisierungssignal (ATON-HS) mit dem zweiten Steuersignal (PWM-HS) kombiniert, um das erste Aktivierungs-/Deaktivierungssignal (S_{HS}) zu bilden.

2. Elektronische Halbbrücken-Vorrichtung (100) nach dem vorhergehenden Anspruch, wobei jede Detektionsschaltung (11, 21) eine kapazitives Element (12, 22) aufweist das direkt mit dem Mittelpunkt (3) verbunden ist und vorgesehen ist um einen Übergangsstrom (i, i₁, i₂) zu erzeugen abhängig von den Änderungen der Spannung (Vm) am Mittelpunkt (3).

3. Elektronische Halbbrücken-Vorrichtung (100) nach dem vorhergehenden Anspruch, wobei jede Detektionsschaltung (11, 21) in Serie mit dem kapazitiven Element (12, 22) eine Diode (14, 24) und einen Shunt-Widerstand (13, 23) aufweist, zum Messen einer Spannung (U, U₁, U₂), die proportional zu dem Übergangsstrom (i, i₁, i₂) ist.

4. Elektronische Halbbrücken-Vorrichtung (100) nach einem der vorhergehenden Ansprüche, wobei jedes Synchronisierungssystem (10, 20) eine Verarbeitungsschaltung (15, 25) aufweist, die eingerichtet ist, aus Messungen der Detektionsschaltung (11, 21), das Synchronisierungssignal (ATON-LS, ATON-HS) zum Aktivieren des zugehörigen Schalters (1, 2) zu erzeugen.

5. Elektronische Halbbrücken-Vorrichtung (100) nach den Ansprüchen 3 und 4, wobei jede Verarbeitungsschaltung (15, 25) einen Spannungskomparator (16, 26) und einen Speicherpunkt (17, 27) aufweist.

6. Elektronische Halbbrücken-Vorrichtung (100) nach einem der vorhergehenden Ansprüche, wobei wenigstens einer der Schalter (1, 2) einen Hochspannungstransistor aufweist.

7. Elektronische Halbbrücken-Vorrichtung (100) nach dem vorhergehenden Anspruch, wobei der Hochspannungstransistor auf Basis von GaN gebildet wird.

8. Elektronische Halbbrücken-Vorrichtung (100) nach einem der zwei vorhergehenden Ansprüche, wobei wenigstens einer der Schalter (1, 2) einen Transistor mit Hochspannungsverarmungsmodus in Serie mit einem Transistor mit Niedrigspannungsanhebung aufweist.

9. Verfahren zum Synchronisieren der alternierenden Aktivierung eines Niedrigpegelschalters (1) und eines Hochpegelschalters (2) in einer elektronischen Halbbrücken-Vorrichtung (100), **dadurch gekennzeichnet, dass** es die folgenden Schritte aufweist:
a) Deaktivieren des Niedrigpegelschalters (1) wenn ein erstes digitales Steuersignal (PWM-LS) in Zustand 0 geht, wobei das erste Steuersignal (PWM-LS) aus einem digitalen Eingangssignal (PWM) gebildet wird, und dessen Flanke zum Triggern von einem Zustand 0 zu einem Zustand 1 um eine Auszeit (TM) geschoben wird, und zwar bezüglich einer Flanke zum Triggern von einem Zustand 0 zu einem Zustand 1 des Eingangssignals (PWM), und dessen Flanke zum Triggern von einem Zustand 1 zu einem Zustand 0 nicht geschoben wird, und zwar bezüglich der Flanke zum Triggern von einem Zustand 1 zu einem Zustand 0 des Eingangssignals (PWM),
b) Interpretieren einer Änderung, die einer steigenden Flanke folgt, und zwar der Spannung (Vm) am Mittelpunkt (3), um ein zweites digitales Synchronisierungssignal (ATON-HS) zu erzeugen, das in der Lage ist einen Hochpegelschalter (2) zu aktivieren, wobei das zweite Synchronisierungssignal in einem Zustand 1 durch die steigende Flanke der Spannung (Vm) am Mittelpunkt (3) aktiviert wird und das in einem Zustand 0 zurückgesetzt wird, wenn das zweite Steuersignal (PWM-HS) in einen Zustand 1 geht,
c) Aktivieren des Hochpegelschalters (2), durch ein zweites Aktivierungs-/Deaktivierungssignal (S_{HS}), das aus der Kombination des zweiten Synchronisierungssignals (ATON-HS) mit dem zweiten Steuersignal (PWM-HS) in einem ODER-Typ Logikgatter (28) resultiert,
d) Deaktivieren des Hochpegelschalters (2), wenn das zweite Steuersignal (PWM-HS) in den Zustand 0 geht, wobei das zweite Steuersignal (PWM-HS) aus dem digitalen Eingangssignal (PWM) gebildet wird, und dessen Flanke zum Triggern von einem Zustand 0 zu einem Zustand 1 um die Auszeit (TM) geschoben wird, und zwar bezüglich einer Flanke zum Triggern von einem Zustand 1 zu einem Zustand 0 des Eingangssignals (PWM), und dessen Flanke zum Triggern von einem Zustand 1 zu einem Zustand 0 nicht geschoben wird, und zwar bezüglich der Flanke zum Triggern von einem Zustand 0 zu einem Zustand 1 des Eingangssignals (PWM), und zwar invertiert im Vergleich zu dem Eingangssignal (PWM) und geschoben um eine Auszeit (TM) bezüglich einer Flanke zum Triggern von einem Zustand 1 zu einem Zustand 0 des Eingangssignals (PWM),
e) Interpretieren einer Änderung, die einer fallenden Flanke folgt, und zwar der Spannung (Vm) am Mittelpunkt (3), um ein erstes Synchronisierungssignal (ATON-LS) zu erzeugen, das in der Lage ist einen Niedrigpegelschalter (1) zu aktivieren, wobei das erste Synchronisierungssignal (ATON-LS) in einem Zustand 1 durch die fallende Flanke der Spannung (Vm) am Mittelpunkt (3) aktiviert wird und das in einem Zustand 0 zurückgesetzt wird, wenn das erste Steuersignal (PWM-LS) in einen Zustand 1 geht,
f) Aktivieren des Niedrigpegelschalters (1), durch ein erstes Aktivierungs-/Deaktivierungssignal (S_{LS}), das aus der Kombination des ersten Synchronisierungssignals (ATON-LS) mit dem ersten Steuersignal (PWM-LS) in einem ODER-Typ Logikgatter (18) resultiert.

10. Verfahren zum Synchronisieren nach dem vorhergehenden Anspruch, wobei die Schritte a) bis f) für jeden neuen Zyklus des alternierenden Schaltens des Niedrigpegelschalters (1) und des Hochpegelschalters (2) wiederholt werden.

## Claims

1. Half-bridge electronic device (100), comprising in series a high level switch (2) and a low level switch (1), connected at a midpoint (3), the half-bridge electronic device (100) further comprising a delay generation device (40),
the delay generation device (40) being capable to form, from a digital input signal (PWM),
- a first digital control signal (PWM-LS) the edge of which for triggering from a state 0 to a state 1 is shifted by one time out (TM ) with respect to an edge for triggering from a state 0 to a state 1 of the input signal (PWM) and the edge of which for triggering from a state 1 to a state 0 is not shifted with respect to the edge for triggering from a state 1 to a state 0 of the input signal (PWM),
- and a second digital control signal (PWM-HS) the edge of which for triggering from a state 0 to a state 1 is shifted by the time out (TM ) with respect to an edge for triggering from a state 1 to a state 0 of the input signal (PWM) and the edge of which for triggering from a state 1 to a state 0 is not shifted with respect to the edge for triggering from a state 0 to a state 1 of the input signal (PWM),
the low level switch (1) and the high level (2) being respectively controlled by a first (S_{LS}) and a second (S_{HS}) activation/deactivation signal, the device (100) being **characterized in that** it comprises:
• a first synchronization system (10) comprising a first detection circuit (11) configured to interpret a change, following a falling edge, of the voltage (Vm) at the midpoint (3), the first system (10) being configured to generate a first digital synchronization signal (ATON-LS), activated at a state 1 by the falling edge of the voltage (Vm) at the midpoint (3) and reset at a state 0 as the first control signal (PWM-LS) goes to a state 1;
• a second synchronization system (20) comprising a second detection circuit (21) configured to interpret a change, following a rising edge, of the voltage (Vm) at the midpoint (3), the second system (20) being configured to generate a second digital synchronization signal (ATON-HS), activated at a state 1 by the rising edge of the voltage (Vm) at the midpoint (3) and reset at a state 0 as the second control signal (PWM-HS) goes to a state 1;
• a logic gate (18) of the OR type combining the first synchronization signal (ATON-LS) with the first control signal (PWM-LS), to form the first activation/deactivation signal (S_{LS});
• a further logic gate (28) of the OR type combining the second synchronization signal (ATON-HS) with the second control signal (PWM-HS), to form the second activation/deactivation signal (S_{HS}).

2. Half-bridge electronic device (100) according to the preceding claim, wherein each detection circuit (11, 21) comprises a capacitive element (12, 22) directly connected to the midpoint (3) and intended to generate a transient current (i, i₁, i₂) depending on the changes of the voltage (Vm) at the midpoint (3).

3. Half-bridge electronic device (100) according to the preceding claim, wherein each detection circuit (11, 21) comprises, in series with the capacitive element (12, 22), a diode (14, 24) and a shunt resistor (13, 23), for measuring a voltage (U, U₁, U₂) proportional to the transient current (i, i₁, i₂) .

4. Half-bridge electronic device (100) according to one of the preceding claims, wherein each synchronization system (10, 20) comprises a processing circuit (15, 25) configured to generate, from measurements of the detection circuit (11, 21), the synchronization signal (ATON-LS, ATON-HS) for activating the associated switch (1, 2).

5. Half-bridge electronic device (100) according to claims 3 and 4, wherein each processing circuit (15, 25) comprises a voltage comparator (16, 26) and a memory point (17, 27).

6. Half-bridge electronic device (100) according to one of the preceding claims, wherein at least one of the switches (1, 2) comprises a high-voltage transistor.

7. Half-bridge electronic device (100) according to the preceding claim, wherein the high voltage transistor is formed based on GaN.

8. Half-bridge electronic device (100) according to one of the two preceding claims, wherein at least one of the switches (1, 2) comprises a high voltage depletion mode transistor in series with a low voltage enhancement mode transistor.

9. Method for synchronising the alternative activation of a low level switch (1) and a high level switch (2) in a half-bridge electronic device (100), **characterized in that** it comprises the following steps:
a) deactivating the low level switch (1) when a first digital control signal (PWM-LS) goes to state 0, the first control signal (PWM-LS) being formed from a digital input signal (PWM), and the edge of which for triggering from a state 0 to a state 1 is shifted by one time out (TM ) with respect to an edge for triggering from a state 0 to a state 1 of the input signal (PWM) and the edge of which for triggering from a state 1 to a state 0 is not shifted with respect to the edge for triggering from a state 1 to a state 0 of the input signal (PWM),
b) interpreting a change following a rising edge of the voltage (Vm) at the midpoint (3), to generate a second digital synchronization signal (ATON-HS) capable of activating a high level switch (2), the second synchronization signal being activated at a state 1 by the rising edge of the voltage (Vm) at the midpoint (3) and reset at a state 0 as a second digital control signal (PWM-HS) goes to a state 1,
c) activating the high level switch (2), by a second activation/deactivation signal (S_{HS}) resulting from the combination of the second synchronization signal (ATON-HS) with the second control signal (PWM-HS) in an OR-type logic gate (28),
d) deactivating the high level switch (2) when the second control signal (PWM-HS) goes to state 0, the second control signal (PWM-HS) being formed from the input signal (PWM), and the edge of which for triggering from a state 0 to a state 1 is shifted by the time out (TM ) with respect to an edge for triggering from a state 1 to a state 0 of the input signal (PWM) and the edge of which for triggering from a state 1 to a state 0 is not shifted with respect to the edge for triggering from a state 0 to a state 1 of the input signal (PWM) , inverted as compared to the input signal (PWM) and shifted by a time out (TM ) with respect to an edge for triggering from a state 1 to a state 0 of the input signal (PWM),
e) interpreting a change following a falling edge of the voltage (Vm) at the midpoint (3) to generate a first synchronization signal (ATON-LS) capable of activating a low level switch (1), the first synchronization signal (ATON-LS) being activated at a state 1 by the falling edge of the voltage (Vm) at the midpoint (3) and reset at a state 0 as the first control signal (PWM-LS) goes to a state 1,
f) activating the low level switch (1), by a first activation/deactivation signal (S_{LS}) resulting from the combination of the first synchronization signal (ATON-LS) with the first control signal (PWM-LS) in an OR type logic gate (18).

10. Method for synchronising according to the preceding claim, wherein steps a) to f) are repeated for each new cycle of alternate switching of the low level switch (1) and of the high level switch (2).
